# EUROPEAN PATENT APPLICATION

(11) **EP 1 717 686 A2**
(43) Date of publication of application: **02.11.2006**
(21) Application number: 06008095.9
(22) Date of filing: 19.04.2006
(51) Int. Cl.: G06F 3/048

(54) **Apparatus and method for displaying icons and controlling direct link menus in portable terminal**

(30) Priority: 20.04.2005 KR 20050032793
(71) Applicant: Samsung Electronics Co., Ltd., Suwon-si, Gyeonggi-Do (KR)
(72) Inventor: Park, Seong-Jin, Yeongtong-gu Suwon-si Gyeonggi-do (KR)
(74) Representative: Lang, Johannes

(57) **Abstract**

Disclosed is an apparatus and a method is provided for displaying icons and controlling direct link menus in a portable terminal. The method for displaying icons in a portable terminal includes displaying only the essential icons (310) of all the icons set in an icon area (300). All the icons (310,320,330) are displayed together with an icon (330) informing a user of generation of an event in the icon area (300), if the event is generated. The method for displaying menus in a portable terminal includes displaying icons direct link menus and data in a predetermined area of the portable terminal. A mode of the portable terminal is directly converted to a mode of a selected menu, if an icon of the direct link menus is selected.

## Description

### BACKGROUND OF THE INVENTION

### Field of the Invention

The present invention relates to an apparatus and a method for displaying icons and controlling direct link menus in a portable terminal. More particularly, the present invention relates to an apparatus and a method of displaying all of the icons which are set according to a generation of an event, and can also directly convert the mode of the portable terminal from a corresponding menu through data link menus.

### Description of the Related Art

In a general portable terminal, icons for displaying a state and set functions of the portable terminal are displayed only at locations determined according to icons in an icon area of a display unit. Therefore, if the number of the icons is increased in the icon area, a restriction is imposed for displaying all the icons at fixed locations.

Further, a user accesses a corresponding menu, data to be used, or corresponding data to detect a menu in the portable terminal through several key manipulations. Methods have been implemented that allow a user to register a corresponding menu in a favorite section in the portable terminal. In order to enter into the corresponding menu, however, a screen of the portable terminal may be moved from a main screen to a menu of subsidiary screen. Therefore, the corresponding menu cannot be directly accessed.

Accordingly, there is a need for an improved method for displaying an unrestricted number of icons that relate to the state, function, or event generated by the portable terminal; and displaying icons of direct link menus that are accessible for converting the mode of the portable terminal.

### SUMMARY OF THE INVENTION

An aspect of embodiments of the present invention is to address at least the above problems and/or disadvantages and to provide at least the advantages described below. Accordingly, an aspect of embodiments of the present invention is to provide an apparatus and a method for displaying icons and controlling the direct link menus in a portable terminal, which can display all the icons which are set according to generation of an event, and can directly convert the menu of the portable terminal to a corresponding menu through direct link menus.

In order to accomplish the above object, there is provided a method for displaying icons in a portable terminal that includes displaying only the essential icons of all the icons set in an icon area. All the icons are displayed together with an icon informing a user of generation of an event in the icon area, if the event is generated.

There is also provided a method for displaying direct link menus in a portable terminal that includes displaying direct link menus in a predetermined area of the portable terminal. A mode of the portable terminal is directly converted to a mode of a selected menu, if an icon of the direct link menus is selected.

There is further provided a portable terminal comprising an icon area in a display. Essential icons are displayed of all the icons set in the icon area. A generated event icon is displayed in the icon area with all the set icons. Direct link menus and data are displayed in a predetermined area of the display, wherein the generated event icon is deleted if the event is completed, and a mode of the portable terminal is converted to a mode of a selected menu or data, if an icon of the direct line menus is selected.

Other objects, advantages, and salient features of the invention will become apparent to those skilled in the art from the following detailed description, which taken in conjunction with the annexed drawings, discloses exemplary embodiments of the invention.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is a block diagram of a portable terminal according to an exemplary embodiment of the present invention;
FIG. 2 is a flow chart for describing an icon displaying method of a portable terminal according to an exemplary embodiment of the present invention;
FIGs. 3A and 3B are views for illustrating the icon displaying method of a portable terminal as described in FIG. 2;
FIG. 4 is a flow chart for describing a method for displaying direct link menus of a portable terminal according to an exemplary embodiment of the present invention; and
FIGs. 5A and 5B are views illustrating the method for displaying direct link menus of a portable terminal as described in FIG. 4.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

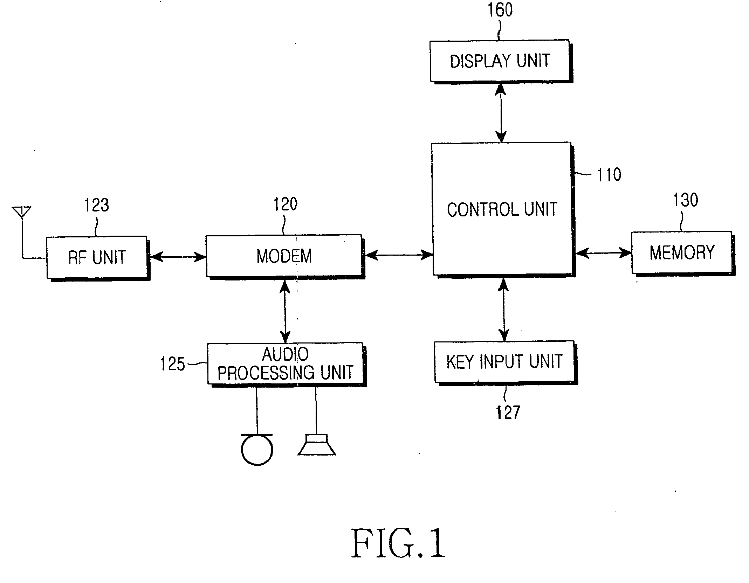

FIG. 1 is a block diagram of a portable terminal according to an exemplary embodiment of the present invention.

Referring to FIG. 1, an RF unit 123 performs a radio communication function of the portable terminal. The RF unit 123 includes an RF transmitter which raises and amplifies frequencies of transmitted signals and an RF receiver which amplifies received signals with low noises and lowers the frequencies. A modem 120 includes a transmitter which encodes and modulates the transmitted signals and a receiver which demodulates and decodes the received signals. An audio processing unit 125 preferably includes a codec, which includes a data codec which processes packet data, and an audio codec which processes audio signals of voices. The audio processing unit 125 converts the digital audio signals received in the modem 120 to analog signals through the audio codec and reproduces the audio signals, or converts the analog audio signals generated in a microphone to digital signals through the audio codec and transmits the digital signals to the modem 120. The codec is preferably provided either separately or in a control unit 110.

A memory 130 includes a program memory and data memory. The program memory can store both programs for controlling general operations of the portable terminal along with programs for flexibly displaying the icon related to the generation of an event, and controlling the direct link menus according to an exemplary embodiment of the present invention. Further, the data memory temporarily stores data generated while performing the programs. The memory 130 can store various icons, which are preferably displayed in an icon area according to an exemplary embodiment of the present invention.

The control unit 110 controls the overall operation of the portable terminal. The control unit 110 preferably includes the modem 120 and the codec. If an event is generated according to an exemplary embodiment of the present invention, the control unit 110 controls the portable terminal by expanding the icon area. The icon, which displays the generation of the event and all of the set icons, are flexibly displayed. Further, the control unit 110 displays the direct link menus and data in a predetermined area of the display unit 160 according to the frequency in which the menus and data are used. The frequency of use is determined by whether the menus have been used recently, and according to the menu setting of a user. If a corresponding menu, data of the direct link menus, or data is selected according to an exemplary embodiment of the present invention, the control unit 110 preferably controls the portable terminal to directly convert to a mode of a selected menu or display contents of the data.

The display unit 160 displays the user data outputted from the control unit 110. The display unit 160 can employ a liquid crystal display (LCD). Accordingly, the display unit 160 can include an LCD controller, a memory which can store image data, and an LCD display device. Further, if the LCD is embodied in a touch screen manner, it can be used as an input section. The display unit 160 includes an icon area in which icons are displayed according to an exemplary embodiment of the present invention. The display unit 160 also includes a predetermined area in which the direct link menus and data are displayed.

A key input unit 127 includes keys for inputting number and letter information, and function keys for setting various functions. The key input unit 127 preferably includes a function key for selecting the direct link menu and data displayed in the predetermined area, according to an exemplary embodiment of the present invention.

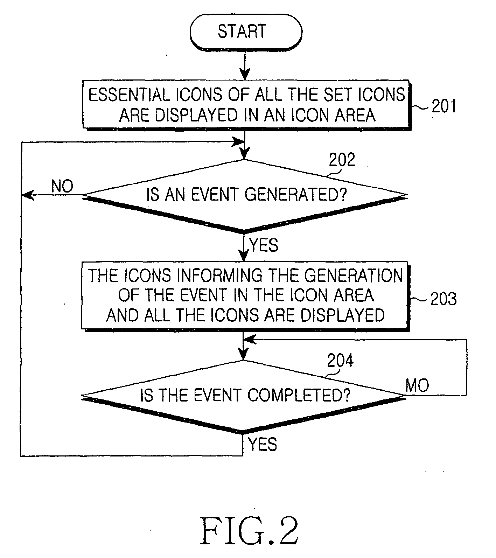

Hereinafter, the operations in which the icons are displayed and in which the direct link mode is controlled in the portable terminal will be described in detail with reference to FIGs. 2 to 5.

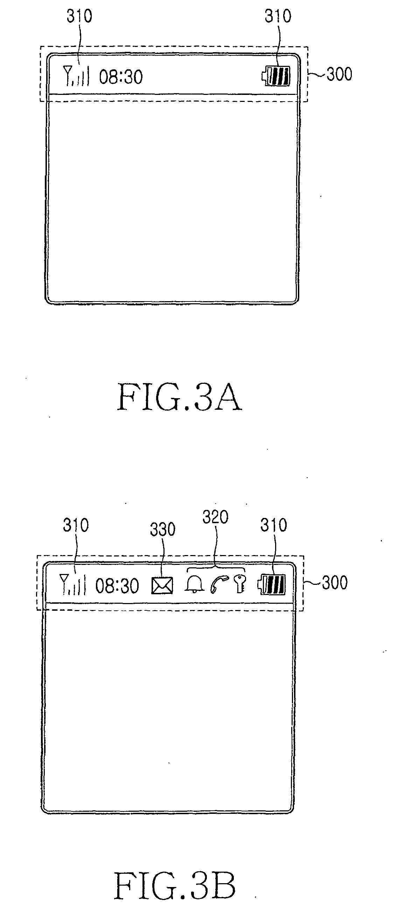

FIG. 2 is a flow chart for describing the icon displaying method of the portable terminal according to an exemplary embodiment of the present invention. FIG. 3A shows essential icons which are displayed in an icon area, and FIG. 3B shows all of the icons which are displayed in the icon area when an event is generated.

Hereinafter, an exemplary embodiment of the present invention will be described in detail with reference to FIGs. 2 and 3.

Referring to FIG. 2, in Step 201, among all the icons for displaying the state of the portable terminal and set functions, only the essential icons are displayed in the icon area 300 of the display unit 160. The remaining icons are hidden so as to not be displayed in the icon area 300.

As shown in FIG. 3A, the essential icons may be those representing the state of the portable terminal. For example, the state of the portable terminal preferably includes the reception sensitivity and the amount of the battery, and icons selected by a user from all the icons for displaying the set functions.

If an event is generated in Step 201 in which the essential icons are displayed in the icon area 300, the control unit 110 detects the event in Step 202 and proceeds with Step 203.

The control unit 110, which has detected the generation of the event in Step 203 expands the icon area 300 displayed in a menu bar type, to display the icon informing a user of the generation of the event and all of the essential and hidden icons. If the event is completed, the control unit 110 detects the completion of the event in Step 204 and reduces the icon area to an original size to proceed with Step 201 for displaying only the essential icons.

Referring to FIG. 3B to explain the above-mentioned steps, if the event of a received message is generated in Step 201, as shown in FIG. 3A, the control unit 110 expands the icon area 300 to display the icon 330 informing a user of the received message and all of the essential and hidden icons 310 and 320. When the received message is retrieved, the control unit 110 detects the retrieval of the message and deletes the icon that informs the user of the received message, at the same time, the icon area 300 of the menu bar type is reduced to the original size and proceeds with Step 201 for displaying only the essential icons.

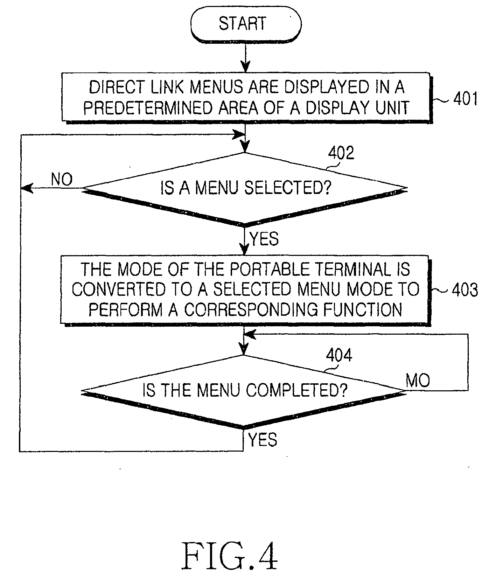

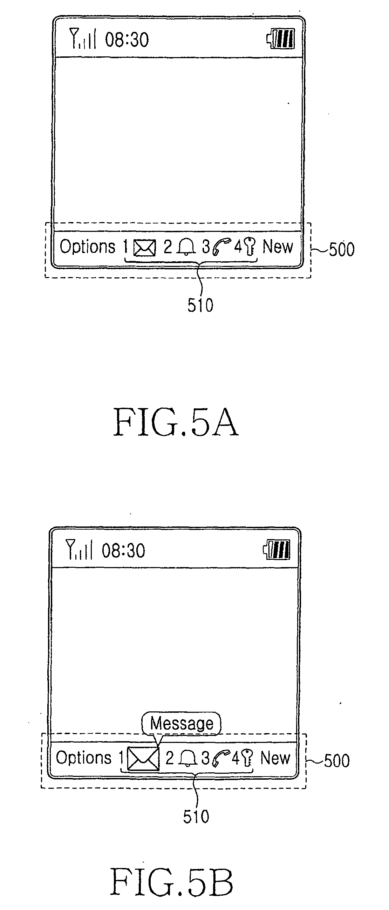

FIG. 4 is a flow chart for describing a method for displaying the direct link menus in the portable terminal according to an exemplary embodiment of the present invention. FIG. 5A is a view for displaying the icons of the direct link menus, which are displayed in a predetermined area of the display unit of the portable terminal. FIG. 5B is a view for illustrating a state in which an icon of the menu, which is selected from the icons of the direct link menus displayed in the predetermined area, is activated.

Hereinafter, an exemplary embodiment of the present invention will be described in detail with reference to FIGs. 4 and 5.

Referring to FIG. 4, if a menu is selected from the menus displayed in a predetermined area 500 of the display unit 160 of the portable terminal in Step 401, the control unit 110 detects the selection in Step 402 and enters into the selected menu mode to proceed with Step 403 which performs the corresponding function.

The direct link menus displayed in the predetermined area 500 in Step 401 can be displayed according to the frequency of the use of the menus. For example, the frequency of use is determined by whether the menus have been used recently, and according to the menu setting of a user.

Further, the corresponding menu can be selected from the menus displayed in Step 401. This is done by inputting a function key for selecting the direct link menu provided in the key input unit 127, by inputting a number corresponding to the menu, or by using direction keys in the direct link menus. Further, if the display unit 160 is embodied in a touch screen manner, the menu can be selected by way of direct touch.

The corresponding function is completed in the selected menu mode. The control unit 110 detects the completion in Step 404 and proceeds with Step 401 in which the direct link menus are displayed in the predetermined area 500.

Referring to FIGs. 5A and 5Bwhich explain the above-mentioned steps, the state in which the icons 510 of the direct link menus are displayed in a predetermined area 500, as shown in FIG. 5A, a user can select a corresponding menu by utilizing either function keys for menu selection, direction keys, or by inputting a number corresponding to the menu.

In FIG. 5A, if the user locates the cursor on the message icon to convert the mode of the portable terminal to a message mode, the control unit 110 detects that and activates the selected message icon as shown in FIG. 5B. If the message icon on which the cursor is located is selected, the control unit 110 detects the conversion and converts the mode of the portable terminal to the message mode in order to perform a corresponding function.

In an exemplary embodiment of the present invention, steps in which the direct link menus are displayed in the predetermined area, and the mode of converting the portable terminal to the mode of the selected menu has been explained. However, the data, such as, frequently used phone numbers, received messages, as well as the menus, can be displayed to directly display the contents of the selected data. The data displayed in the predetermined area can be displayed according to the frequency of use. Such frequency of use is determined by whether the data has been used recently, and according to a menu setting of a user.

Since the present invention flexibly displays the icons in the portable terminal, the display unit of a reduced size can be effectively used. Furthermore, since the direct link menus are displayed in a predetermined area of the portable terminal, a user can access the menus and data, which are frequently used, without going through several inputting steps. Thus, the various functions of the portable terminal can be more conveniently used.

While the invention has been shown and described with reference to a certain exemplary embodiment thereof, it will be understood by those skilled in the art that various changes in form and details may be made therein without departing from the spirit and scope of the invention as defined by the appended claims.

## Claims

1. An apparatus for displaying icons in a portable terminal, comprising
a display unit for displaying essential icons of all icons set in the icon area if the event is not generated or the event is completed, and when the event is generated, displaying an event generation icon for notifying generation of an event in the icon area with all the set icons; and
a control unit for controlling to display essential icons from all icons set inthe icon area of the display unit if the event is not generated or the event is completed, when the event is generated, to display the event generation icon in the icon area with all the set icons and when the event is completed, to delete the event generation icon from the icon area.

2. The apparatus according to claim 1, wherein the control unit controls to expand the icon area, when all the icons are displayed together with the event generation icon.

3. The apparatus according to claim 1, wherein the essential icons are icons in the icon area that are selected from all the icons, representing a state of the portable terminal.

4. An apparatus for displaying icons in a portable terminal, comprising
a display unit for providing a predetermined area in which a direct link menus and data displayed, and
a control unit for displaying the direct link menus and data in the predetermined area of the display unit and converting a mode of the selected menu or data, if an icon of the direct link menus is selected.

5. The apparatus according to claim 4, wherein the menus are selected and displayed according to the frequency of use, wherein the frequency of use is determined by whether the menus have been recently used and to the setting of a user.

6. The apparatus of according to claim 4, wherein the control unit controls to display the data in the predetermined area of the display unit according to the frequency of use, according to whether the data has been recently used and according to the setting of a user, and to display the contents of selected corresponding data.

7. A method for displaying icons in a portable terminal, the method comprising the steps of:
displaying only essential icons of all the icons set in an icon area; and
displaying all the icons together with an icon informing a user of a generation of an event in the icon area, if the event is generated.

8. A method according to claim 6, further comprising the step of displaying only the essential icons in the icon area, if the event is completed.

9. A method according to claim 6, wherein the icon area is expanded, when all the icons are displayed together with the icon informing a user of the generation of the event.

10. A method according to claim 6, wherein the essential icons are icons in the icon area that are selected from all the icons, representing a state of the portable terminal.

11. A method for displaying menus in a portable terminal, the method comprising the steps of:
displaying icons of direct link menus and data in a predetermined area of the portable terminal; and
directly converting a mode of the portable terminal to a mode of a selected menu of the direct link menus, if an icon of the direct link menus is selected.

12. A method according to claim 10, wherein the menus is selected and displayed according to the frequency of use, according to whether the menu has been recently used and according to the setting of a user.

13. A method according to claim 10, wherein data is displayed in the predetermined area according to the frequency of use, according to whether the data has been recently used and according to the setting of a user, and displaying the contents of selected corresponding data.
